# EUROPÄISCHE PATENTSCHRIFT

(11) **EP 0 638 274 B1**
(45) Veröffentlichungstag und Bekanntmachung des Hinweises auf die Patenterteilung: **11.12.1996**
(21) Anmeldenummer: 94107595.4
(22) Anmeldetag: 17.05.1994
(51) Int. Cl.: A47J 47/06, A47G 19/34, B65D 81/24

(54) **Vorratsbehälter für Kaffeepulver**
Storage container for coffee powder
Récipient de stockage pour café

(30) Priorität: 19.05.1993 DE 4316716
(43) Veröffentlichungstag der Anmeldung: 15.02.1995
(73) Patentinhaber: Zimmer, Berno, D-66839 Schmelz-Hüttersdorf (DE)
(72) Erfinder: Zimmer, Berno, D-66839 Schmelz-Hüttersdorf (DE)
(74) Vertreter: Patentanwälte Möll und Bitterich

(56) Entgegenhaltungen:
- DE-C- 295 453
- FR-A- 817 492
- US-A- 1 936 857
- US-A- 2 096 358
- US-A- 2 726 012
- US-A- 4 362 095
- US-A- 4 646 919

## Beschreibung

Die Erfindung betrifft Vorratsbehälter für Kaffeepulver gemäß dem Oberbegriff des Anspruchs 1.

Vorratsbehälter für gemahlenes Kaffeepulver, mit und ohne Dosiervorrichtung, sind in den unterschiedlichsten Ausführungen und in großen Stückzahlen weltweit im Einsatz. Sie bestehen im wesentlichen aus einem Behälter mit Boden und Seitenwand und einem abnehmbaren, möglichst luftdicht schließenden Deckel. Damit soll gewährleistet werden, daß das beim Mahlen der Kaffeebohnen frei werdende Kaffeearoma bis zum Verbrauch erhalten bleibt. Falls eine Dosiervorrichtung vorgesehen ist, ist diese üblicherweise im Bereich des Bodens positioniert, so daß die abgemessene Menge Kaffeepulver aufgrund der Schwerkraft in ein darunter gestelltes Behältnis fällt. Dosiervorrichtungen funktionieren mit Hilfe von Dreh- und/oder Schiebebewegungen.

Die Erfahrung zeigt jedoch, daß auch die Vorratsbehälter mit den bestschließenden Deckeln nicht verhindern können, daß das Kaffeearoma schnell verschwindet. Schuld daran ist der Sauerstoff im Luftraum unter dem Deckel.

Einen Versuch, dieses Problem zu lösen, zeigt die US-A-19 36 857. Diese Schrift offenbart einen Vorratsbehälter für Kaffeepulver. Dieser besteht aus einem Zylinder aus Glas oder dergleichen mit einer luftdicht eingepaßten Entnahmevorrichtung am unteren Ende und einem luftdicht aufgesetzten Deckel am oberen Ende. Dieser Deckel ist abnehmbar, um frisches Kaffeepulver nachfüllen zu können. Ein beweglicher, mit Hilfe einer umlaufenden Dichtung gegen die Behälterwand abgedichteter Innendeckel liegt lose auf dem Kaffeepulvervorrat auf. Auf dem Innendeckel befindet sich ein Gummibalg, aus dem mittels Fingerdruck die Luft herausgepreßt werden kann. Das Innere des Gummibalges steht über eine Bohrung im Innendeckel und ein Rückschlagventil mit dem Kaffeepulvervorrat derart in Verbindung, daß die sich in den Poren zwischen den Pulverkörnchen befindende Luft abgesaugt wird.

Diese Konstruktion führt zwar zu einer Verbesserung des Aromaschutzes; im praktischen Gebrauch hat sie jedoch erhebliche Nachteile. Zunächst einmal reduziert der erforderliche Gummibalg das praktisch nutzbare Behältervolumen. Des weiteren schädigt das das Glas durchdringende ultraviolette Licht das Kaffeearoma. Der wesentliche Nachteil ist jedoch darin zu sehen, daß der Gummibalg bei jeder Entnahme von Kaffeepulver Luft, die das Kaffeearoma schädigt, in das Innere des Vorratsbehälters einsaugt. Deshalb muß nach jeder Entnahme von Kaffeepulver der luftdichte Deckel des Vorratsbehälters abgenommen, der Gummibalg von Hand entlüftet und anschließend der Behälterdeckel wieder luftdicht aufgesetzt werden. Derartig umständliche Prozeduren werden jedoch von der Mehrzahl der Kaffeetrinker abgelehnt.

Infolge der oben genannten Mängel und der erhöhten Ansprüche ist der Kaffeeverbraucher verstärkt dazu übergegangen, die benötigten Kaffeemengen jeweils unmittelbar vor dem Verbrauch zu mahlen oder das Kaffeepulver in Kleinportionen zu kaufen. Dies steht jedoch im Widerspruch zu den üblichen und bewährten Maßnahmen der Rationalisierung und des fortgeschrittenen Umweltbewußtseins.

Der Erfindung liegt daher die Aufgabe zugrunde, einen Vorratsbehälter für gemahlenes Kaffeepulver anzugeben, mit dessen Hilfe sichergestellt ist, daß auch größere Mengen Kaffeepulver ihr Aroma über lange Zeit behalten.

Diese Aufgabe wird gelöst durch einen Vorratsbehälter mit den Merkmalen des Patentanspruchs 1.

Dank der vorliegenden Erfindung ist sichergestellt, daß das gemahlene Kaffeepulver nicht nur keine Verbindung zur umgebenden Atmosphäre besitzt, sondern daß die Luft- bzw. Sauerstoffmenge, die Kontakt zum Kaffeepulver hat, und zwar auch die, die sich in den Zwischenräumen zwischen dem Kaffeepulver befindet, immer minimal ist. Frische Luft kann nicht hinzutreten. Dadurch werden die schädlichen oxidativen Einflüsse der Luft auf das absolute Minimum reduziert. Eine beim Wiederaufsetzen des Innendeckels etwa vorhandene Übermenge an Luft kann durch die Kaffeepulver-Entnahmevorrichtung entweichen.

Dank seines geringen Gewichts läßt sich der Vorratsbehälter in das Kaffeegeschäft mitnehmen, wo er mit frisch gemahlenem Kaffeepulver gefüllt wird. So wird der Verpackungsmüll minimiert und die Arbeit im Kaffeegeschäft weiter rationalisiert, da das Umfüllen, Verpacken in kleinere Einheiten und deren Lagerung bis zum Verkauf entfällt.

Insgesamt erhält man dank der Erfindung einen sehr einfachen und preiswerten Vorratsbehälter für gemahlenes Kaffeepulver, in dem sich das Aroma auch über Wochen hin unverändert hält.

Der Innenndeckel kann nicht nur mittels einer Spiralfeder, sondern auch mittels eines Hydraulik- oder Pneumatikzylinders auf den Kaffeepulvervorrat gedrückt werden. Welche der Varianten jeweils zum Einsatz kommt, hängt vom Anwendungsfall ab. So werden die Behälter mit Spiralfeder wohl überwiegend für Haushalt, Gaststätten und Kleingewerbe, die Behälter mit Druckmittelzylinder eher für Großgewerbe, Kaffeehäuser, Kantinen und Händler geeignet sein.

Gemäß der Erfindung sind Lippendichtung und Innendeckel einstückig hergestellt. Lippendichtungen besitzen eine sehr gute Wirkung.

Um die Aromadichtheit zu gewährleisten, weist gemäß einer vorteilhaften Ausgestaltung der Erfindung die Entnahmevorrichtung einen Dosierbehälter auf. Auf diese Weise wird dem erfindungsgemäßen Vorratsbehälter immer genau die für die Zubereitung der gewünschten Menge Kaffee benötigte Kaffeepulvermenge entnommen, wobei auch die Restluftmenge entsprechend reduziert wird.

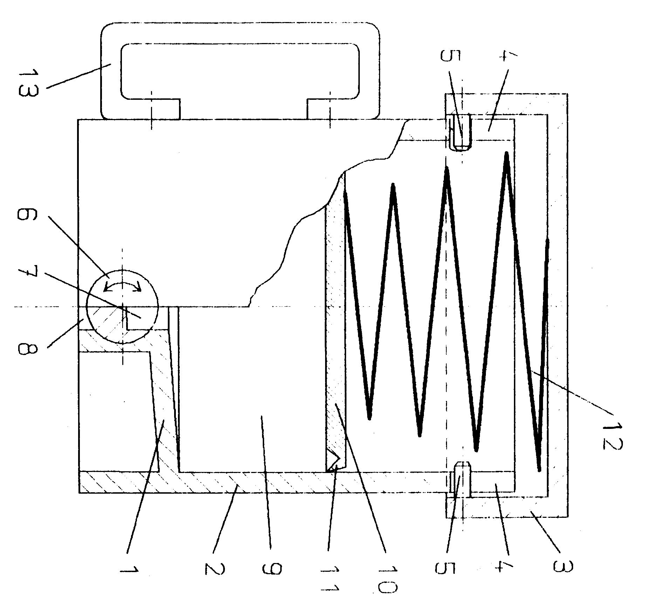

Anhand der Zeichnung soll die Erfindung in Form eines Ausführungsbeispiels näher erläutert werden.

Man erkennt im Teil-Längsschnitt einen Vorratsbehälter für gemahlenes Kaffeepulver mit einem Boden 1, einer Seitenwand 2 und einem abnehmbaren Deckel 3, der mittels Bajonettverschluß 4, 5 auf den Behälter 1, 2 aufgesetzt werden kann. Im Boden 1 erkennt man eine drehbare Entnahmevorrichtung 6 mit Dosierbehälter 7 und eine Bodenauslaßöffnung 8, durch die die im Dosierbehälter 7 sich befindende Menge Kaffepulver in ein darunter gestelltes Behältnis, beispielsweise einen Kaffeefilter, fallen kann.

Alle Teile des Vorratsbehälters bestehen aus lichtundurchlässigen Materialien, so daß das Kaffeepulver auch gegen die schädliche Wirkung der ultravioletten Strahlen geschützt ist.

Um die Aromadichtheit zu gewährleisten, ist ein besonderer Innendeckel 10 vorgesehen mit einer umlaufenden Lippendichtung 11, die sich innen gegen die Seitenwand 2 dicht anlegt. Der Innendeckel 10 steht unter dem Druck einer Druckfeder 12, deren anderes Ende sich gegen den abnehmbaren Deckel 3 abstützt.

Unter dem Druck der Feder 12 legt sich der aromadichte Innendeckel 10 fest auf die Oberseite des Kaffeepulvervorrats, wodurch dieser zusammengedrückt wird. Dabei wird die sich zwischen den Kaffeepulverkörnern befindende Luft- bzw. Sauerstoffmenge herausgedrückt und entweicht beim erstmaligen Betätigen der Entnahmevorrichtung 6.
Anstelle der in der Zeichnung dargestellten drehbaren Entnahmevorrichtung 6 können auch andere, beispielsweise mit Schiebern arbeitende Entnahmevorrichtungen vorgesehen werden, solange sie einen luft- bzw. aromadichten Verschluß ermöglichen.

Der Innenraum 9 des Vorratsbehälters nimmt das gemahlene Kaffeepulver auf.

## Patentansprüche

1. Vorratsbehälter für Kaffeepulver, mit einem Boden (1), einer Seitenwand (2), einem abnehmbaren Deckel (3), einem beweglichen, auf dem Kaffeepulvervorrat aufliegenden, mittels einer Lippendichtung (11) gegen die Seitenwand (2) abdichtenden Innendeckel (10) und mit einer luftdicht in den Boden (1) eingesetzten Entnahmevorrichtung (6), dadurch gekennzeichnet, daß der Deckel (3) einen Luftzutritt zu dem Raum oberhalb des Innendeckels (10) ermöglicht, daß eine Druckfeder (12) auf den Innendeckel (10) drückt, daß Lippendichtung (11) und Innendeckel (10) einstückig sind und daß alle Teile aus lichtundurchlässigen Materialien bestehen.

2. Vorratsbehälter nach Anspruch 1, dadurch gekennzeichnet, daß die Entnahmevorrichtung (6) einen Dosierbehälter (7) aufweist.

3. Vorratsbehälter nach Anspruch 1 oder 2, dadurch gekennzeichnet, daß die Druckfeder als Hydraulik- oder Pneumatikzylinder ausgebildet ist.

4. Vorratsbehälter nach einem der Ansprüche 1 bis 3, dadurch gekennzeichnet, daß ein Tragegriff (13) vorgesehen ist.

## Claims

1. A storage container for coffee powder, with a base (1), a side wall (2), a detachable lid (3), a movable inner cover (10) resting on the stored coffee powder and sealing against the side wall (2) by means of a lip seal (11), and with a discharge device (6) inserted in an airtight manner in the base (1), characterised in that the lid (3) allows air to enter the space above the inner cover (10), in that a compression spring (12) presses on to the inner cover (10), in that the lip seal (11) and the inner cover (10) are in one piece, and in that all components consist of materials which are opaque.

2. A storage container according to Claim 1, characterised in that the discharge device (6) has a metering container (7).

3. A storage container according to Claim 1 or 2, characterised in that the compression spring is in the form of a hydraulic or pneumatic cylinder.

4. A storage container according to any one of Claims 1 to 3, characterised in that a carrying handle (13) is provided.

## Revendications

1. Réservoir de stockage pour du café en poudre avec un fond (1), une paroi latérale (2), un couvercle séparable (3), un couvercle intérieur (10) mobile, situé sur la réserve de café en poudre et rendu étanche à l'aide d'un joint à lèvres (11) contre la paroi latérale (2), et un dispositif de prélèvement (6) hermétique, placé dans le fond (1), caractérisé en ce que le couvercle (3) permet une entrée d'air dans l'espace situé au-dessus du couvercle intérieur (10), en ce qu'un ressort de pression (12) appuie sur le couvercle intérieur (10), en ce que le joint à lèvres (11) et le couvercle intérieur (10) forment un seul bloc et en ce que toutes les pièces sont en matériaux opaques.

2. Réservoir de stockage selon la revendication 1, caractérisé en ce que le dispositif de prélèvement (6) présente un réservoir de dosage (7).

3. Réservoir de stockage selon la revendication 1 ou la revendication 2, caractérisé en ce que le ressort de pression est réalisé comme cylindre hydraulique ou pneumatique.

4. Réservoir de stockage selon l'une quelconque des revendications 1 à 3, caractérisé en ce qu'une poignée de manutention (13) est prévue.
